(19) Europäisches Patentamt
European Patent Office
Office européen des brevets

(11) Numéro de publication : **0 486 356 A1**

(12) **DEMANDE DE BREVET EUROPEEN**

(21) Numéro de dépôt : **91402950.9**

(51) Int. Cl.$^5$ : **G02F 1/11**, G02B 5/18

(22) Date de dépôt : **05.11.91**

(30) Priorité : **13.11.90 FR 9014038**

(43) Date de publication de la demande : **20.05.92 Bulletin 92/21**

(84) Etats contractants désignés : **DE GB IT NL**

(71) Demandeur : **THOMSON-CSF
51, Esplanade du Général de Gaulle
F-92800 Puteaux (FR)**

(72) Inventeur : **Broussoux, Dominique
THOMSON-CSF, SCPI, Cédex 67
F-92045 Paris la Défense (FR)**
Inventeur : **Robin, Philippe
THOMSON-CSF, SCPI, Cédex 67
F-92045 Paris la Défense (FR)**
Inventeur : **Loiseaux, Brigitte
THOMSON-CSF, SCPI, Cédex 67
F-92045 Paris la Défense (FR)**
Inventeur : **Schnell, Jean-Philippe
THOMSON-CSF, SCPI, Cédex 67
F-92045 Paris la Défense (FR)**

(74) Mandataire : **Guérin, Michel et al
THOMSON-CSF SCPI
F-92045 PARIS LA DEFENSE CEDEX 67 (FR)**

(54) **Modulateur spatial bidimensionnel de lumière à commande piézoélectrique, comprenant un réseau de Bragg.**

(57) L'invention concerne un modulateur de lumière spatial bidimensionnel comprenant un réseau de Bragg réalisé à partir de matériaux piézoélectriques en couches périodiques empilées (I) et (II) d'indices de réfraction différents, et un système de commande permettant d'induire la modulation, tels que par exemple un réseau d'électrodes croisées (Ei, Ej). Le coefficient de réflexion dépend de l'accord ou du désaccord de la période du réseau par rapport à la longueur d'onde et à l'angle d'incidence du faisceau à moduler. Cet accord est commandé par effet piézoélectrique inverse sur les matériaux du réseau de Bragg.

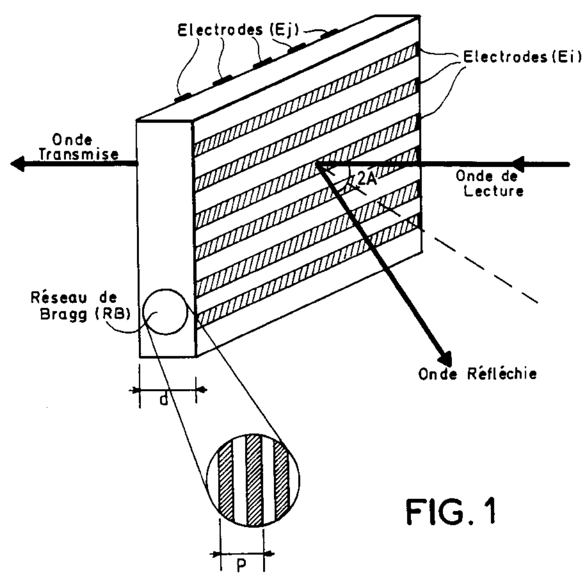


FIG. 1

EP 0 486 356 A1

La présente invention concerne un modulateur de lumière généralement utilisable pour des applications dans le domaine de la visualisation ou du traitement du signal, ou pour des applications de déflexion de faisceau lumineux.

On propose selon l'invention un modulateur réalisé à partir d'un réseau de Bragg et dont la particularité est de mettre en jeu l'effet piézoélectrique inverse. L'effet piézoélectrique inverse est la déformation mécanique de certains matériaux en présence d'un champ électrique appliqué à ce matériau. On rappelle qu'un réseau de Bragg est un réseau périodique de couches superposées alternées d'indices optiques différents.

La propriété d'un réseau de Bragg est de réfléchir la lumière avec un pic de réflexion d'autant plus sélectif que le nombre de périodes de l'alternance de couches est plus élevé et que les indices des couches alternés sont voisins l'un de l'autre. La longueur d'onde à laquelle se produit le pic dépend d'une part des épaisseurs et indices des couches, et d'autre part de l'angle d'incidence du faisceau à réfléchir. Ou réciproquement, le coefficient de réflexion dépend, pour une longueur d'onde donnée, des épaisseurs et indices. Selon l'invention on utilise l'effet de piézoélectricité des couches pour modifier les épaisseurs de couches et donc pour aboutir à une modulation de la lumière réfléchie à partir d'un signal électrique.

Plus précisément, on propose selon l'invention un modulateur de lumière réalisé à partir d'un réseau de Bragg comportant un empilement périodique d'une couche (I) et d'une couche (II) d'indices de réfraction différents et constituées, au moins pour l'une d'entre elles, de matériaux piézoélectriques.

Des moyens sont prévus pour déformer mécaniquement l'empilement en utilisant l'effet piézoélectrique inverse, dans un sens tendant à modifier la période de l'empilement ; on modifie ainsi la réflectivité du réseau à l'endroit de la déformation.

L'effet piézoélectrique inverse peut résulter tout simplement de l'application d'un champ électrique perpendiculairement à l'empilement. Cela peut être fait par des électrodes placées de part et d'autre de l'empilement, avec des moyens pour contrôler la tension appliquée entre les électrodes.

Mais on peut également prévoir des moyens de commande acousto-électriques : un transducteur électro-acoustique (peigne interdigité ) commandé par un signal électrique et placé sur le même substrat que le réseau de Bragg permet d'établir dans le réseau de Bragg un réseau de points de compression, compression dans le sens perpendiculaire aux couches dans lequel le coefficient de réflexion est modifié. L'onde acoustique se propage parallèlement aux couches du réseau de Bragg. Tous les rayons réfléchis en des points de compression identiques se recombinent, induisant ainsi une déflexion de faisceau réfléchi dont l'angle est donné par la période de commande du transducteur.

Les matériaux constituant les couches peuvent être quelconques pourvu qu'ils soient piézoélectriques. Des semiconducteurs tels que des composés III-V et leurs dérivés conviennent bien (par exemple de l'arséniure de gallium, AsGa, de l'arséniure de gallium aluminium AlGaAs, du phosphure d'indium InP, etc. ). Des composés tels que le niobate de lithium, $LiNbO_3$, les oxydes de bismuth et silicium $Bi_{12}SiO_{20}$ ou de bismuth et germanium $Bi_{12}GeO_{20}$ conviennent également. Enfin, des polymères piézoélectriques sont particulièrement intéressants.

Pour les polymères, on peut obtenir le réseau de Bragg soit par superposition de couches de polymères différents ayant des indices de réfraction différents, soit par un seul polymère dopé par strates avec une molécule de colorant qui modifie son indice de réfraction : l'alternance de polymère dopé et non dopé constitue alors le réseau de Bragg.

Les matériaux piézoélectriques peuvent de manière générale être déposés par couches successives de matériaux différents; mais ils peuvent aussi être déposés en couche épaisse d'un seul matériau lorsqu'ils sont photoréfractifs; dans ce cas, on peut en effet induire a posteriori les couches alternées d'indices différents, dans la couche épaisse unique; l'effet photoréfractif est en effet la propriété que possède le matériau de pouvoir changer d'indice localement sous l'action d'une illumination locale suffisamment énergétique. On focalise alors l'énergie lumineuse dans les strates où on veut modifier l'indice, ces strates étant espacées avec un pas constant. Le niobate de lithium et les oxydes de bismuth cités plus haut sont des matériaux non seulement piézoélectriques mais aussi photoréfractifs.

Dans certaines applications il sera avantageux de prévoir que certaines couches de l'alternance (de préférence la ou les couches supérieures, du côté du faisceau lumineux incident à moduler) sont dopées avec une molécule photochrome, c'est-à-dire que leur transparence varie avec la quantité d'énergie qu'elles reçoivent à certaines longueurs d'onde. Cela permet notamment d'éviter une détérioration ou au moins un éblouissement du réseau par une énergie incidente trop forte.

Le modulateur selon l'invention, qui permet de moduler le coefficient de réflexion d'un faisceau lumineux incident (normal ou oblique) peut être constitué par un élément unique commandé électriquement. Mais pour de nombreuses applications il sera souhaitable de disposer d'un modulateur à plusieurs éléments, et notamment un modulateur matriciel comportant un réseau bidimensionnel d'éléments de modulation commandés individuellement.

Dans une réalisation, le modulateur est un modulateur bidimensionnel comportant un réseau de Bragg à couches piézoélectriques placé entre deux réseaux croisés d'électrodes. Le champ électrique appliqué entre une électrode du premier réseau et une électrode du deuxième réseau permet de modifier localement, à l'intersection des électrodes, le coefficient de réflexion.

Dans une autre réalisation, le réseau de Bragg piézoélectrique est placé sur une couche photoconductrice, l'ensemble étant placé entre deux électrodes. Une différence de potentiel élevée est appliquée entre les électrodes. Un éclairement local de la couche photoconductrice permet de transférer sur le réseau piézoélectrique tout ou une partie de cette différence de potentiel présente globalement entre les électrodes.

On comprendra que le modulateur selon l'invention peut fonctionner de plusieurs manières différentes : par exemple on envoie un faisceau incident à une longueur d'onde déterminée sur un élément de réseau de Bragg piézoélectrique accordé à la longueur d'onde du faisceau pour l'angle d'incidence reçu. Par une commande électrique on peut faire varier le coefficient de réflexion et par conséquent choisir de renvoyer plus ou moins ou de laisser passer plus ou moins l'intensité lumineuse du faisceau incident. Le système fonctionne en transmission ou en réflexion.

On peut aussi moduler toute une surface d'image à partir d'un réseau bidimensionnel éclairé globalement par un faisceau à une longueur d'onde déterminée.

On peut aussi sélectionner par commande électrique une longueur d'onde déterminée pour la réfléchir sans réfléchir les autres.

Un avantage important de l'invention est le fait que la modulation de lumière porte sur la totalité de l'énergie incidente et pas sur une seule des composantes de polarisation comme dans beaucoup de modulateurs existants.

On comprendra que l'invention ne réside pas dans la constitution d'un réseau de Bragg par effet piézoélectrique dans un matériau massif, mais dans la compression commandée d'un réseau pré-existant réalisé en couches de matériaux piézoélectriques.

La présente invention sera mieux comprise et d'autres avantages apparaîtront à la lecture de la description qui va suivre, donnée à titre non limitatif, et grâce aux dessins annexés parmi lesquels :

– la figure 1 représente une première structure de modulateur selon l'invention, dans laquelle l'adressage électrique se fait par un jeu d'électrodes Ei et Ej ;

– la figure 2 représente une deuxième structure de modulateur selon l'invention, dans laquelle la tension de commande est appliquée grâce à une couche photoconductrice (III) et à un couple d'électrodes E et F ;

– la figure 3 représente l'évolution de la réflectivité (en pourcentage), obtenue avec un exemple de réseau de Bragg au repos réalisé avec des matériaux polymères, en fonction de l'angle de lecture ;

– la figure 4 représente l'évolution de la réflectivité (en pourcentage), obtenue avec l'exemple du réseau de Bragg réalisé avec des matériaux polymères cités précédemment, en fonction de la déformation induite par l'effet piézoélectrique inverse, et ce pour un angle de lecture de 25° correspondant au repos à un minimum de réflectivité,

– la figure 5 représente l'évolution de la réflectivité (en pourcentage), obtenue avec l'exemple du réseau de Bragg réalisé avec des matériaux polymères cités précédemment, en fonction de l'angle de lecture pour une déformation de 1 pour mille.

– la figure 6 représente une structure générale de projecteur d'images utilisant un modulateur selon l'invention, dont la commande est assurée par l'intermédiaire d'un photoconducteur,

– la figure 7 représente un déflecteur comportant un modulateur selon l'invention et un transducteur électroacoustique de surface,

– la figure 8 représente l'allure du signal électrique appliqué au transducteur électroacoustique dans le cas d'un modulateur selon l'invention assurant de la déflexion de faisceau,

– la figure 9 représente un déflecteur comportant un modulateur selon l'invention et un transducteur électro-acoustique de volume, le modulateur étant un matériau dans lequel le réseau de Bragg est préalablement photoinduit.

Dans la structure de la figure 1, un champ électrique appliqué perpendiculairement au plan des couches, entraîne une déformation des couches (effet piézoélectrique inverse) et donc une variation de la période P du réseau ou $P = e_1 + e_2$ si $e_1$ est l'épaisseur d'une couche (I) et $e_2$ l'épaisseur d'une couche (II). On a dans ce cas $P = Po (1 + h)$ avec Po période du réseau en l'absence de champ électrique.

Pour une longueur d'onde de lecture L donnée et un angle de lecture A fixe défini par rapport à la normale au plan de couches, correspondant ou voisin de la condition de Bragg, soit $\cos A = L/(2n P)$ où n indice moyen de réfraction du réseau et P période du réseau de Bragg, la réflectivité passe d'une faible valeur (sans champ électrique il y a désaccord à la condition de Bragg) à une forte valeur en présence du champ électrique, ou inversement, avec éventuellement toutes les valeurs intermédiaires. Il peut y avoir accord à la condition de

Bragg soit en présence d'un champ nul, soit en présence d'un champ non nul de valeur choisie. De même, il peut y avoir désaccord maximal (réflexion nulle) pour une valeur de champ électrique désirée.

La réflectivité R d'un réseau de Bragg peut se calculer en considérant la mise en phase des réflexions élémentaires sur les différentes strates du réseau, et le désaccord de Bragg imposé par une très faible déformation est ainsi amplifié et peut générer de fortes variations de réflectivité grâce au phénomène de couplage d'ondes dans le volume du réseau.

L'effet utilisé dans ce type de modulateur spatial étant indépendant de la polarisation de l'onde de lecture, il devient possible de moduler toute l'énergie incidente. De plus un modulateur selon l'invention permet de sélectionner la longueur d'onde de fonctionnement grâce au contrôle de la période du réseau qui gouverne les angles pour lesquels il y a accord à la condition de Bragg.

Les matériaux piézoélectriques constituant le réseau de Bragg sont de préférence des semiconducteurs ou des photoréfractifs ou des polymères. Plus précisément les matériaux semiconducteurs sont de préférence de l'arséniure de gallium (GaAs) ou de l'arséniure de gallium et d'aluminium ($Ga_xAl_{1-x}A_s$) ou du phosphure d'indium (InP). Pour réaliser le réseau de Bragg, les monocouches dont l'épaisseur doit être contrôlée avec une grande précision sont obtenues par les méthodes MBE ("molecular beam epitaxy" : épitaxie par jets moléculaires) ou MOCVD ("organic molecular chemical vapor deposition" : dépôt par décomposition chimique en phase vapeur de molécules organiques). Par exemple, les couches (I) et les couches (II) peuvent être respectivement obtenues par dépôts successifs d'un semiconducteur de type GaAs et d'un autre semiconducteur de type $Ga_xAl_{1-x}As$), ces deux séries de couches présentant des indices de réfraction différents. Ces matériaux présentent l'intérêt d'être transparents dans l'infrarouge et donc d'être utilisés dans des applications dont les longueurs d'onde de fonctionnement peuvent atteindre 10 $\mu$m. Les matériaux photoréfractifs tels que le niobate de lithium ($LiNbO_3$) ou un oxyde de bismuth et de silicium de type $Bi_{12}SiO_{20}$ ou un oxyde de bismuth et de germanium de type $Bi_{12}Ge0_{20}$ offrent le même intérêt. Dans le cas de tels composés le réseau de Bragg peut être photoinduit (variation d'indice sous l'effet de la lumière à une longueur d'onde donnée) et ne nécessite pas la superposition de deux types de couches de nature différente : on dépose une couche épaisse et on forme ensuite par l'action de la lumière les strates d'indices différents. Cela est réalisé par interférence de deux ondes laser planes : l'hologramme qui s'inscrit de manière permanente est un réseau de strates d'indice optiquement modifié.

Les polymères piézoélectriques présentent d'autres avantages de mise en oeuvre et de coût. En effet, ils peuvent être facilement déposés sur de grandes surfaces par la méthode dite de la "tournette" consistant à déposer une solution de polymère qui après centrifugation et évaporation du solvant conduit à un film mince ou par la méthode dite de "Langmuir-Blodgett" consistant à déposer couche monomoléculaire par couche monomoléculaire. Ces méthodes permettent d'obtenir une épaisseur très bien contrôlée et très homogène pouvant être comprise entre quelques centaines de nm et plusieurs microns. De plus les polymères piézoélectriques possèdent des coefficients piézoélectriques très importants ; ce qui entraîne des tensions de commande plus faibles que celles nécessaires aux semiconducteurs pour induire une même déformation.

Ces matériaux polymères peuvent être dopés avec des molécules de colorants dont la nature et le pourcentage permettent d'adapter précisément l'indice optique moyen du réseau, assurant ainsi la transparence désirée en fonction des longueurs d'ondes incidentes. Certains polymères peuvent aussi être photoréfractifs, permettant une création photoinduite du réseau de Bragg.

Pour certaines applications, la première couche du réseau de Bragg peut être dopée avec des molécules photochromes (dont la transparence varie avec la densité de puissance reçue); on peut éviter ainsi l'éblouissement ou l'endommagement du dispositif en cas d'éclairement trop intense.

Les polymères utilisés sont de préférence du polyfluorure de vinylidene ou des copolymères de trifluoroéthylène ou des copolymères de tétrafluoroéthylène et d'acétate de vinyl. Pour accroître les qualités optiques de réseaux de Bragg réalisés à partir de polymères fluorés il est possible d'effectuer des mélanges de ces polymères avec du polyméthacrylate de méthyle.

Le réseau de Bragg étant constitué par un des types de matériaux précédemment cités, le dispositif de commande électrique générant l'effet piézoélectrique peut être réalisé de différentes manières :

Dans un premier exemple (figure 1), un réseau d'électrodes est réalisé à l'aide d'une série d'électrodes parallèles Ei dans une première direction et une série d'électrodes parallèles Ej perpendiculaires à la première direction (figure 1); à l'aide d'un couple d'électrodes Ei, Ej, on peut créer ainsi un champ électrique perpendiculaire au plan des strates du réseau de Bragg. Ce dernier est placé entre les réseaux d'électrodes. Du côté du faisceau incident à moduler, le réseau d'électrodes est transparent à la longueur d'onde du faisceau à commander. De l'autre côté il peut être transparent ou absorbant. Il s'agit dans ce cas d'un adressage purement électrique permettant une commande locale au niveau d'un croisement d'électrodes.

Dans un autre exemple, une électrode E (transparente à la longueur d'onde du faisceau incident) et un film de matériau photoconducteur (III) déposé sur une électrode F (transparente à la longueur d'onde de

commande du photoconducteur) sont disposés de part et d'autre du réseau de Bragg (figure 2). La commande de l'effet est réalisée optiquement grâce à une onde lumineuse de commande irradiant localement le photoconducteur à un endroit désiré. La résistivité sous éclairement est très différente de la résistivité dans l'obscurité; lorsque la résistivité est rendue faible par un éclairement local, la tension appliquée entre les électrodes E et F est reportée directement aux bornes du réseau de Bragg sélectivement à l'endroit illuminé par l'onde lumineuse de commande, ceci sans action dans les zones obscures. Une telle commande optique offre l'avantage d'une technologie plus légère que celle nécessaire à la mise en oeuvre d'un adressage tout électrique. Elle a en effet l'avantage de permettre facilement la commande de tensions élevées (de l'ordre de 1 000 volts), ce qui serait moins facile avec des éléments tels que des transistors en couche mince placés localement aux croisements des électrodes. L'onde lumineuse de commande est de préférence appliquée du côté opposé au côté d'incidence du faisceau lumineux à commander par le modulateur, mais ce n'est pas obligatoire. Une matrice à cristaux liquides peut être placée à l'arrière de la couche photoconductrice. Elle est elle-même éclairée par une source lumineuse. Elle est commandée électriquement par un signal vidéo oui par un adressage XY ; l'image qu'elle produit à partir de ces signaux est reportée sur la photoconducteur (III) et commande donc point par point le réseau de Bragg. Le faisceau incident sur ce réseau, à la longueur d'onde d'accord du réseau de Bragg, est ainsi modulé bidimensionnellement.

On va donner un exemple de structure de modulation selon l'invention ainsi que les performances qu'il permet d'atteindre.

Le réseau de Bragg est réalisé par l'empilement de couches (I) et (II) constituées par un même polymère dopé par strates avec un colorant permettant d'augmenter sensiblement l'indice de réfraction, ce colorant présentant la formule chimique suivante :

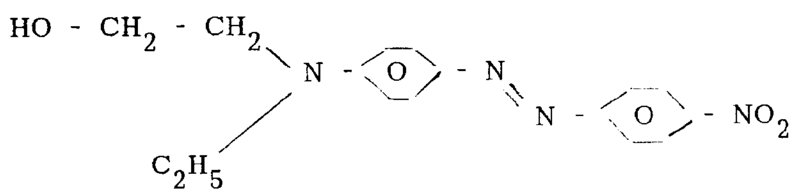

Les caractéristiques du réseau à 1,06 μm sont les suivantes :

indice optique des couches (I) $n_1 = 1,45$

indice optique des couches (II)
avec 50% molaire de colorant $n_2 = 1,75$
épaisseur des couches (I) $e_1 = 0,185$ μm
épaisseur des couches (II) $e_2 = 0,185$ μm
épaisseur totale du réseau $d = 80\ (e_1+e_2) = 29,6$ μm

Le polymère dopé avec 50% de colorant présente un coefficient piézoélectrique $d_{33}$ = 15 pm/V après avoir été polarisé.

Pour créer une déformation de 1 pour mille, la tension V nécessaire à appliquer est calculée comme suit :

$$d/d = d_{33}\ V/d$$

donc V = 1 973 V soit un champ électrique à appliquer de 666 kV/cm, ce champ étant inférieur au champ coercitif du matériau (champ au delà duquel le matériau ne revient plus à son état initial, fatigue du matériau), le champ coercitif étant de 1 MV/cm.

La figure 3 montre que pour un tel réseau il existe des angles de lecture pour lesquels la réflectivité est minimale. La figure 4 illustre l'influence de la déformation induite sur le coefficient de réflexion, en se plaçant au voisinage d'un angle (soit 25°) pour lequel on a effectivement une réflectivité minimale, et la figure 5 montre qu'une déformation de 1 pour mille est capable d'induire une modulation de la réflectivité supérieure à 80 %.

La figure 6 représente une structure générale de projecteur d'image auquel l'invention est applicable. Cette structure utilise une commande par photoconducteur telle que décrite ci-dessus.

L'élément central de l'invention (réseau de Bragg à couches piézoélectriques dont la période d'empilement peut être modifiée) est désigné par la référence 10. Il est éclairé sur sa face avant par un faisceau lumineux

de projection 12 émis par une source de projection 14. Ce faisceau est modulé point par point par l'élément central 10 et renvoyé ainsi modulé vers une optique de grandissement 16 pour être projeté sur un écran 18.

L'élément central 10 est commandé dans cet exemple par une couche photoconductrice comme à la figure 2 ; un modulateur bidimensionnel tel qu'une matrice à cristaux liquides 20 est interposée entre une source d'éclairement 22 (à une longueur d'onde à laquelle le photoconducteur est sensible) et la couche photoconductrice. Une optique 24 est éventuellement prévue pour imager sur la couche photoconductrice de l'élément 10 l'image générée par le modulateur 20.

L'invention est particulièrement intéressante dans l'application à un projecteur du fait que la totalité de l'énergie de la source 14 est modulée et peut être renvoyée vers l'écran.

Si on veut réaliser un projecteur en couleur, on prévoira trois éléments de modulation tels que l'élément 10, associés chacun à des moyens de commande respectifs pour produire par exemple des images verte, bleue et rouge respectivement.

Dans l'exemple de la figure 1, on a prévu un réseau de Bragg bidimensionnel pour réaliser une image bidimensionnelle.

Mais on peut aussi prévoir, un modulateur élémentaire capable de moduler globalement la réflexion ou la transmission d'un faisceau étroit, le faisceau modulé étant ensuite défléchi comme un signal vidéo, par exemple en balayage de lignes et de trames classique en vidéo.

Pour effectuer la déflexion en ligne on peut utiliser un déflecteur acousto-optique, c'est-à-dire un déflecteur dont l'angle de déflexion est commandé par un signal acoustique. Pour la déflexion en trame, on peut utiliser un simple miroir à commande galvanométrique.

Le réseau de Bragg piézoélectrique selon l'invention peut servir de déflecteur de faisceau à la manière d'une antenne de réception à balayage électronique : on établit sur le réseau de Bragg, grâce à un jeu d'électrodes régulières ou grâce à la commande optique à travers le photoconducteur, un motif périodique de maxima et minima de réflexion. Un faisceau incident sur le réseau voit alors un réseau diffractant de pas constant. Il est alors diffracté selon une direction privilégiée qui dépend du pas du réseau (pas mesuré parallèlement au plan des couches). Ce pas est modifiable à volonté.

Le réseau de Bragg à couches piézoélectriques selon l'invention peut être commandé directement par des électrodes placées de part et d'autre de l'empilement, comme cela a été expliqué précédemment.

Mais dans une variante d'utilisation la commande est indirecte : le réseau de Bragg à couches piézoélectriques est associé à un transducteur électroacoustique qui reçoit un signal électrique et qui produit dans les couches du réseau de Bragg une onde acoustique se propageant parallèlement au plan des couches et exerçant une compression dans le sens de l'empilement (c'est-à-dire perpendiculairement au plan des couches).

Dans la structure représentée à la figure 7 le transducteur émet une onde qui se propage en surface.

Sur un substrat 30, par exemple en arséniure de gallium sont déposées une alternance de couches piézoélectriques 32 d'indices alternés n1, n2 et d'épaisseur également alternées 21, 22.

Un transducteur acoustique de surface 34, par exemple en forme de peigne intergidité, est placé à une extrémité du substrat pour produire, lorsqu'il est excité, une onde acoustique se propageant en surface. Cette onde établit des compressions dans le réseau 32 et module donc le coefficient de réflexion de celui-ci pour une longueur d'onde et une incidence donnée. La période de l'onde acoustique le long de la surface (qui n'a rien à voir avec la période (e1 + e2) de l'empilement du réseau de Bragg) représente l'espacement des maxima et minima de compression du réseau de Bragg.

La propagation de l'onde se traduit donc par la présence (et la propagation) d'un réseau diffractant possédant des maxima et des minima de réflexion périodiques le long de la surface, puisque la réflexion dépend de l'état de compression.

Un faisceau lumineux incident est diffracté avec des angles de diffraction privilégiés (un ou plusieurs) qui sont fonction du pas du réseau diffractant (mesuré le long de la surface).

En modifiant la fréquence du signal électrique appliqué au transducteur on modifie le pas du réseau diffractant (mesuré le long de la surface). Cela permet de régler l'angle de réflexion du faisceau incident (en transmission ou en réflexion).

La forme du signal électrique appliqué au transducteur est de préférence un signal alternatif de haute fréquence ayant une enveloppe périodique triangulaire, comme représenté à la figure 8, la période P du réseau diffractant étant liée à la période de l'enveloppe triangulaire.

Cette forme d'onde a l'avantage de minimiser les ordres secondaires de diffraction. Le coefficient de réflexion global de l'onde incidente est lié à la différence de coefficients de réflexion existant localement dans les creux et les bosses de l'onde triangulaire.

Dans une autre réalisation encore représentée à fig. 9 un transducteur électroacoustique 40 appliqué contre un barreau 42 de manière à engendrer dans ce barreau 42 une onde acoustique se propageant dans le volume du barreau (et non en surface comme à la figure 9).

Dans le barreau on a formé un réseau de Bragg 44 (par exemple par photo induction sous l'action de la lumière selon une technique connue d'holographie à partir de deux ondes lumineuses planes d'énergie suffisante qu'on fait interférer dans le corps du barreau).

Le réseau est formé de strates parallèles à la direction de propagation de l'onde émise par le transducteur 40. Le pas d'empilement du réseau est susceptible de se modifier sous l'action de cette onde.

Et la modification du pas est elle-même périodique (dans le sens de propagation de l'onde), lorsque le signal électrique appliqué au transducteur est périodique. La période de modification du pas est liée à la fréquence du signal électrique et à la vitesse de propagation de l'onde.

Comme pour la réalisation de la figure 9, un faisceau incident à la fréquence d'accord du réseau de Bragg voit un réseau diffractant avec des minima et maxima de réflexion selon une période spatiale déterminée. Il est diffracté selon une direction préférentielle qui est directement fonction du pas du réseau dans le sens de propagation de l'onde acoustique.

Pour terminer la description de cette invention, on peut signaler qu'il peut être intéressant d'utiliser le réseau comme corrélateur acousto-optique.

## Revendications

1. Modulateur de lumière, caractérisé en ce qu'il comprend :
   – un réseau de Bragg réalisé à partir d'un empilement périodique d'un couple de couches (I) et (II), lesdites couches (I) et (II) ayant des indices de réfraction différents et étant constituées, au moins pour l'une d'elles, de matériaux piézoélectriques ;
   – un dispositif de commande destiné à modifier mécaniquement la périodicité du réseau.

2. Modulateur de lumière selon la revendication 1, caractérisé en ce que les matériaux piézoélectriques sont des polymères piézoélectriques dopés ou non avec des molécules colorantes permettant de faire varier l'indice de réfraction de ces polymères.

3. Modulateur de lumière selon la revendication 2, caractérisé en ce que les polymères piézoélectriques sont du polyfluorure de vinylidene ou des copolymères de trifluoroéthylène ou des copolymères de tétrafluoroéthylène ou des copolymères de polycyanure de vinylidene et d'acétate de vinyl.

4. Modulateur de lumière selon l'une des revendications 1 à 3, caractérisé en ce que les couches (I) ou les couches (II) sont constituées par un mélange de polymère de type polyfluorure de vinylidene ou copolymère de trifluoroéthylène ou copolymères de tétrafluoroéthylène et de polyméthacrytate de méthyle.

5. Modulateur de lumière selon la revendication 1, caractérisé en ce que les matériaux piézoélectriques sont des semiconducteurs.

6. Modulateur de lumière selon la revendication 5, caractérisé en ce que les semiconducteurs sont de l'arséniure de gallium ou de l'arséniure de gallium et d'aluminium ou du phosphure d'indium.

7. Modulateur de lumière selon la revendication 1, caractérisé en ce que les matériaux piézoélectriques sont des matériaux photoréfractifs.

8. Modulateur de lumière selon la revendication 7, caractérisé en ce que les matériaux photoréfractifs sont du niobate de lithium ($LiNbO_3$) ou un oxyde de bismuth et de silicium de type $Bi_{12}SiO_{20}$ ou un oxyde de bismuth et de germanium de type $Bi_{12}GeO_{20}$.

9. Modulateur de lumière selon l'une quelconque des revendications 1 à 8, caractérisé en ce qu'il comprend, pour commander électriquement la modulation ou l'obturation d'un faisceau incident, des électrodes disposées parallèlement au plan des couches.

10. Modulateur de lumière selon l'une quelconque des revendications 1 à 8, caractérisé en qu'il comprend, pour commander électriquement et ponctuellement la modulation d'un faisceau incident, un réseau croisé d'électrodes Ei et Ej, transparentes à la longueur d'onde du faisceau à moduler, disposées parallèlement au plan des couches.

**11.** Modulateur de lumière selon l'une quelconque des revendications 1 à 8, caractérisé en ce qu'il comporte, pour commander la modulation d'un faiceau incident, un transducteur électroacoustique apte à faire propager une onde acoustique dans le réseau de Bragg parallèlement au plan des couches du réseau.

**12.** Modulateur de lumière selon la revendication 11, caractérisé en ce que le transducteur électroacoustique est un peigne interdigité déposé parallèlement au plan des couches du réseau, générant une onde acoustique de surface.

**13.** Modulateur de lumière selon la revendication 10, caractérisé en ce que la première couche du réseau de Bragg est dopée avec des molécules photochromes.

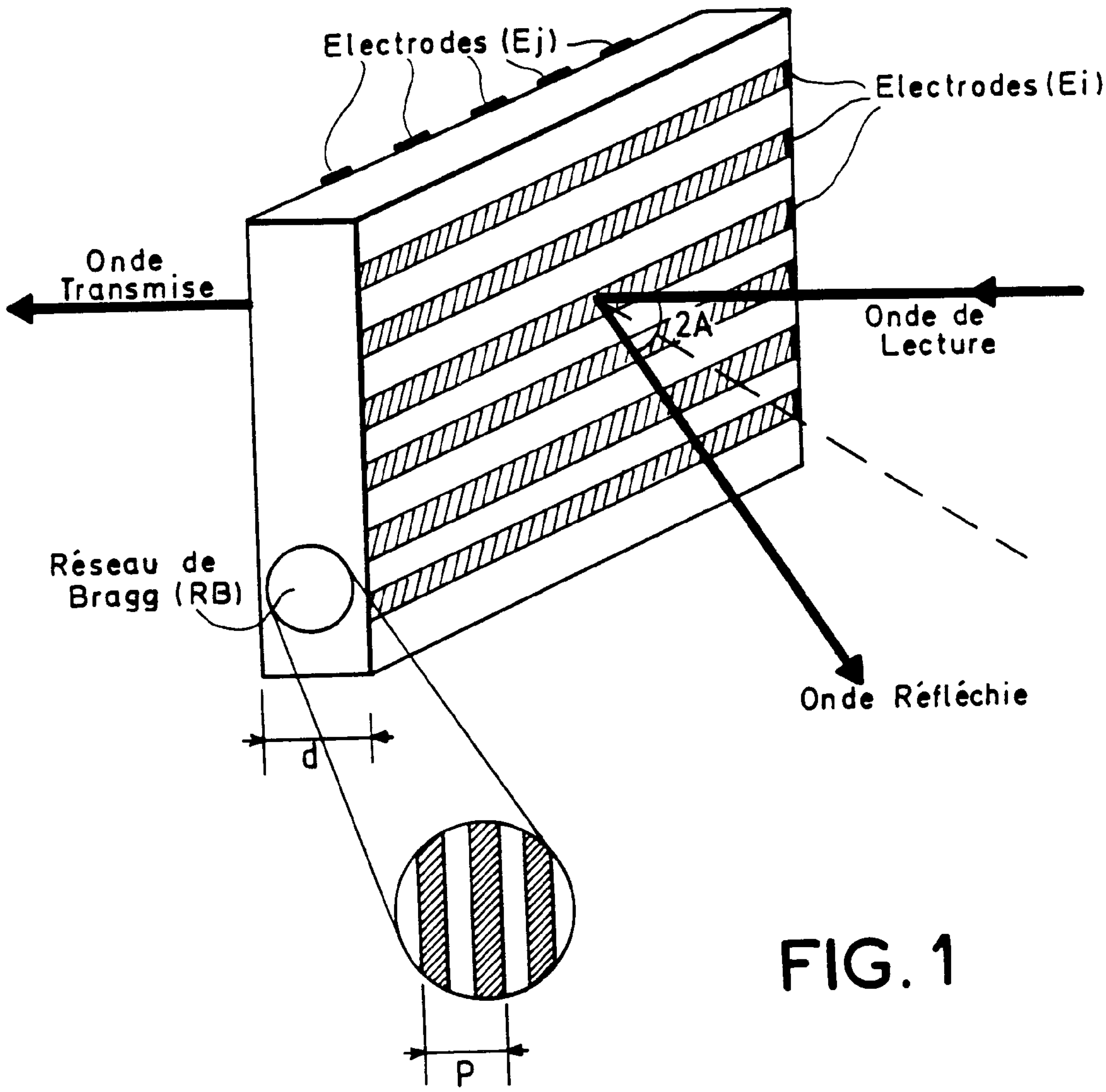
Electrodes (Ej)
Electrodes (Ei)
Onde Transmise
Onde de Lecture
2A
Réseau de Bragg (RB)
Onde Réfléchie
d
P

FIG. 1

FIG. 2

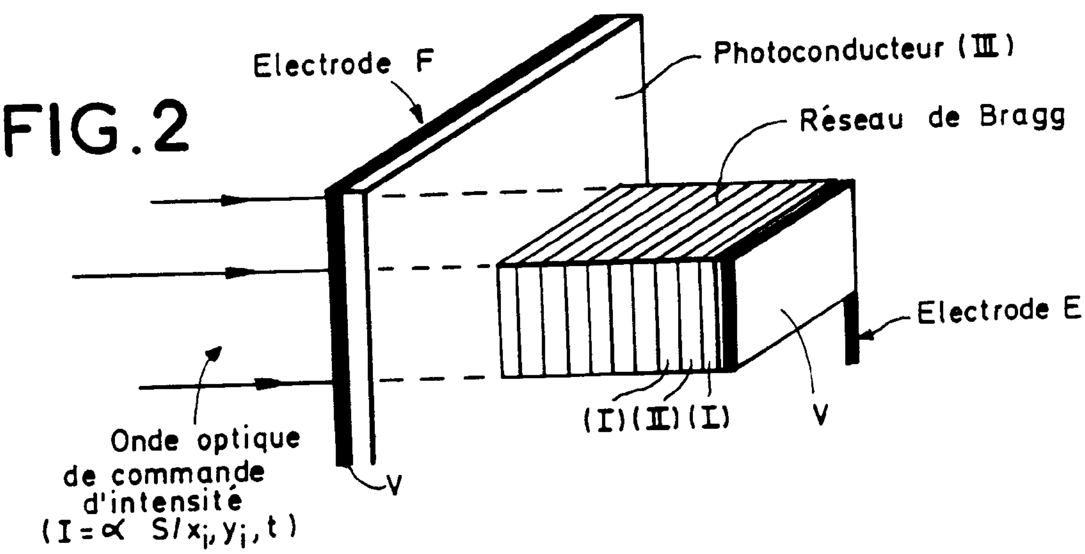
Electrode F
Photoconducteur (III)
Réseau de Bragg
Electrode E
(I) (II) (I)
V
V
Onde optique de commande d'intensité ($I = \alpha\ S / x_i, y_i, t$)

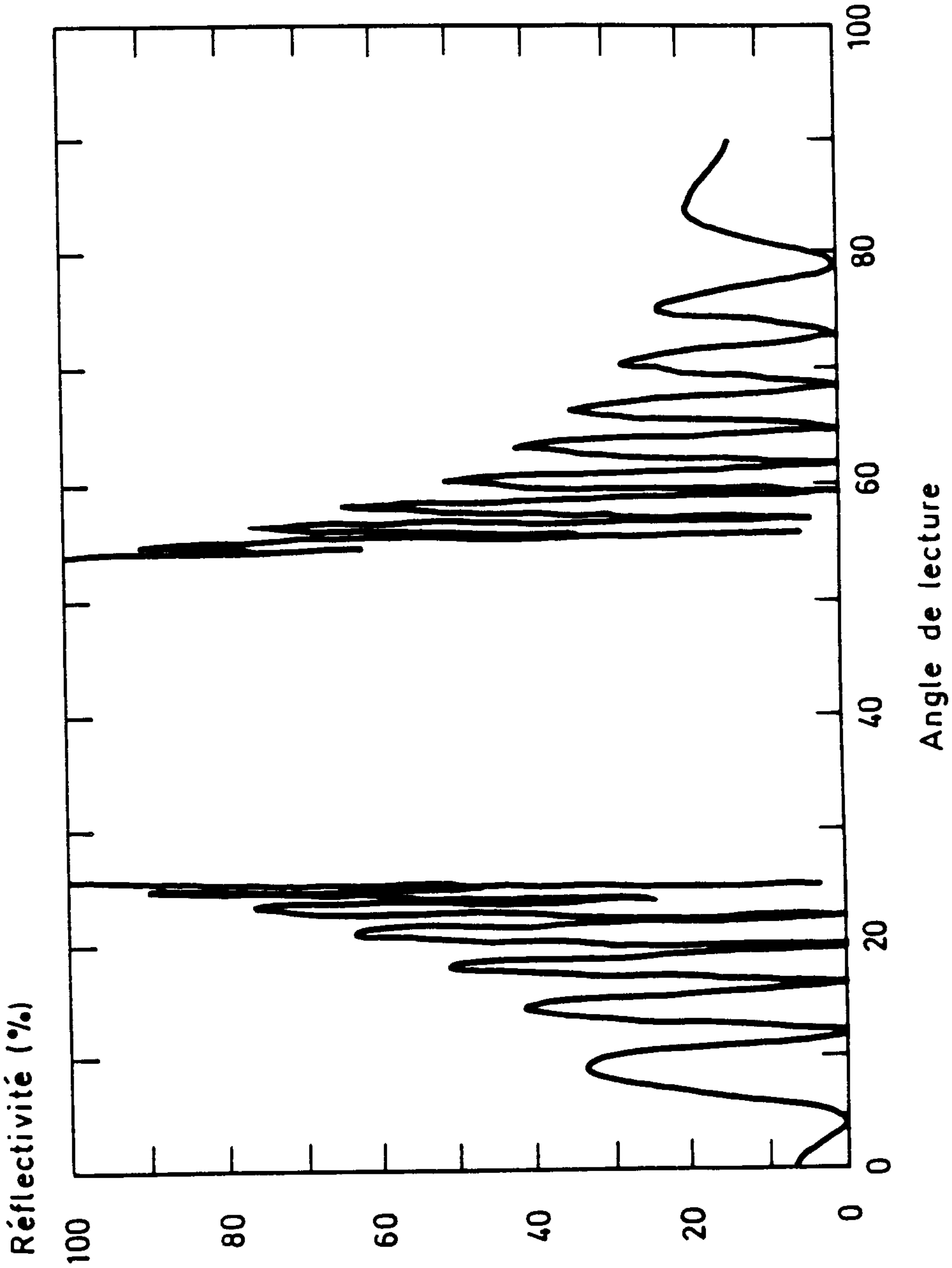
Réflectivité (%)
100
80
60
40
20
0
0
20
40
60
80
100
Angle de lecture

FIG.3

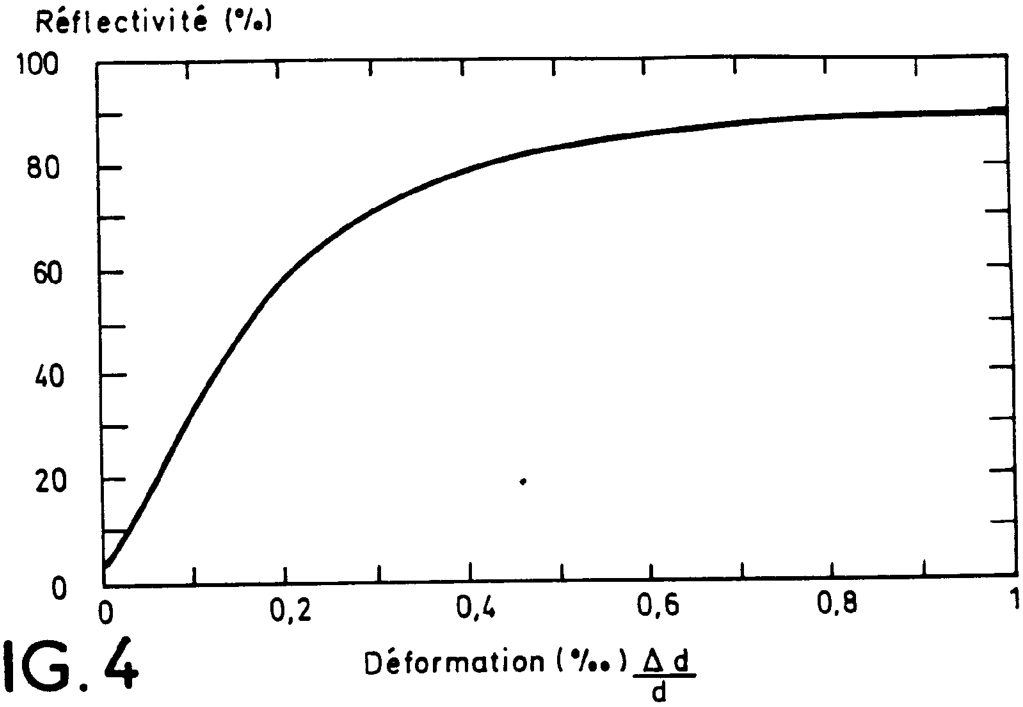
Réflectivité (%)
100
80
60
40
20
0
0
0,2
0,4
0,6
0,8
1
Déformation (‰) $\frac{\Delta d}{d}$

FIG. 4

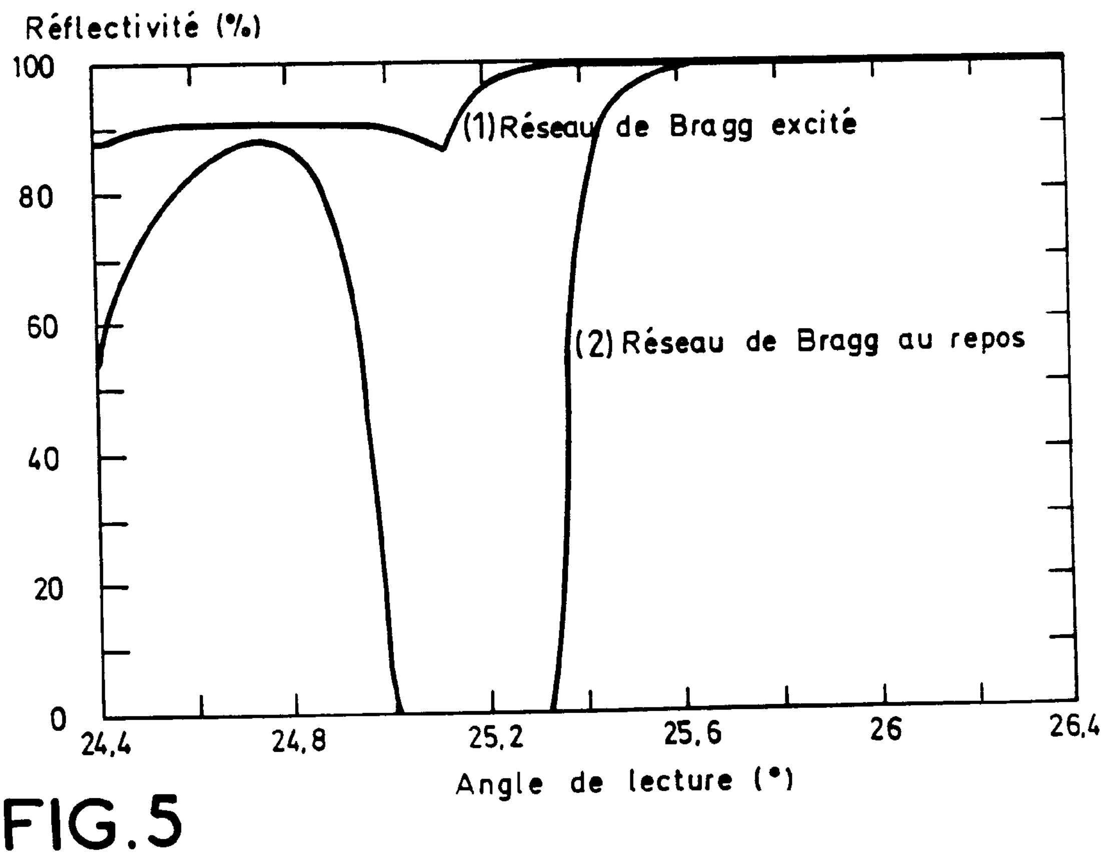
Réflectivité (%)
100
80
60
40
20
0
(1) Réseau de Bragg excité
(2) Réseau de Bragg au repos
24,4
24,8
25,2
25,6
26
26,4
Angle de lecture (°)

FIG. 5

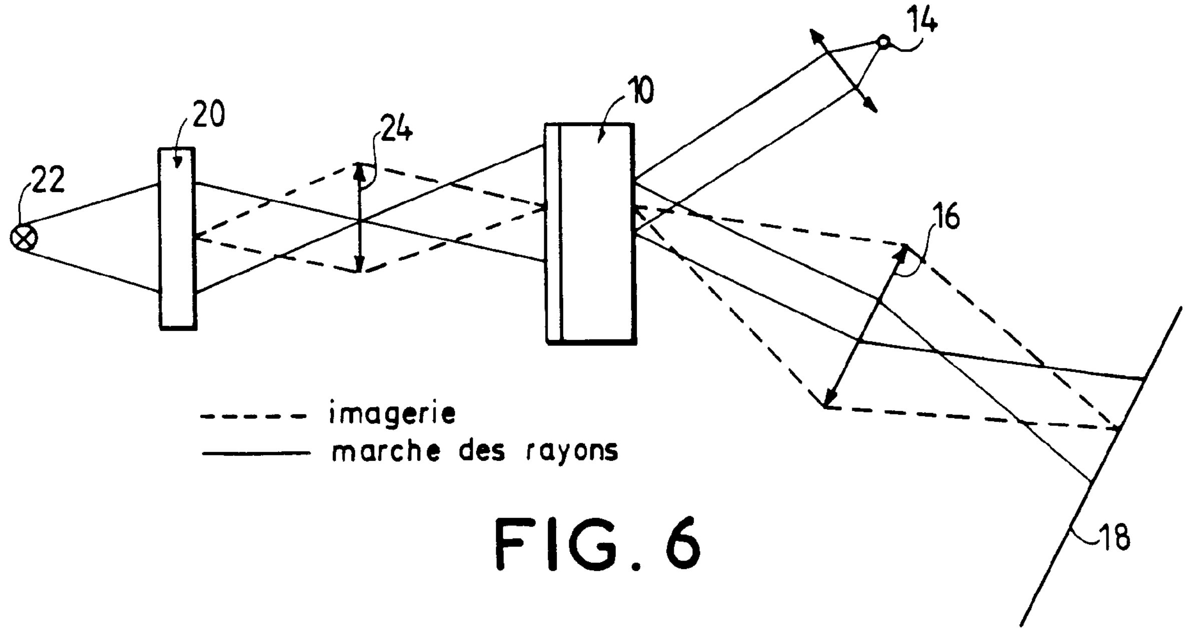


FIG. 6

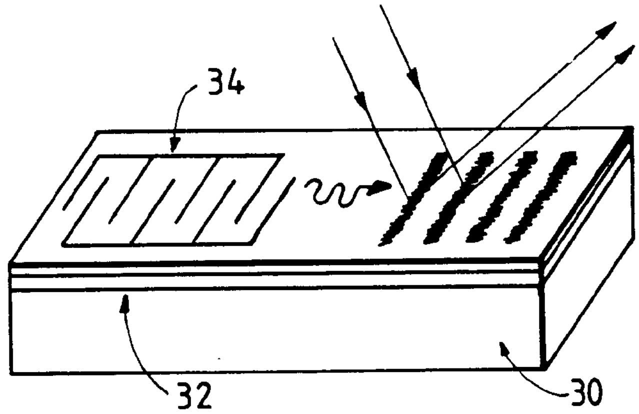


FIG. 7

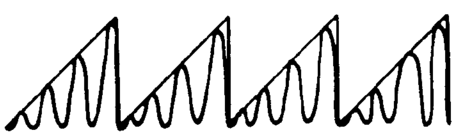

FIG. 8

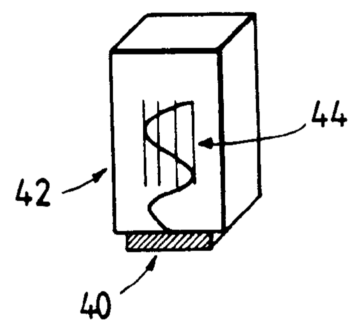


FIG. 9

Office européen des brevets

# RAPPORT DE RECHERCHE EUROPEENNE

Numero de la demande

EP 91 40 2950
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | APPLIED PHYSICS LETTERS. vol. 55, no. 22, 27 Novembre 1989, NEW YORK US pages 2292 - 2294; J. HE ET AL.: 'Resonant acousto-optical interaction in superlattices' * page 2292, colonne de gauche, ligne 11 - ligne 19 * * page 2294, colonne de gauche, ligne 16 - ligne 25 * * page 2294, colonne de droite, ligne 5 - ligne 7 * * page 2294, colonne de droite, ligne 16 - ligne 25; figure 4 * | 1,5-6,9 | G02F1/11 G02B5/18 |
| Y | | 2-4,7-8, 10 | |
| A | | 11 | |
| | --- | | |
| Y | EP-A-0 014 693 (TORAY INDUSTRIES) * revendications 3-4 * --- | 2-4 | |
| Y | GB-A-2 189 038 (STC) * page 1, ligne 58 - ligne 64; revendication 10 * --- | 7-8 | DOMAINES TECHNIQUES RECHERCHES (Int. Cl.5 ) |
| Y | US-A-4 023 969 (SHERIDON) * colonne 9, ligne 38 - ligne 59; figure 2 * --- | 10 | G02F G02B |
| A | JOURNAL OF APPLIED PHYSICS. vol. 50, no. 3, Mars 1979, NEW YORK US pages 1222 - 1225; M. KIMURA ET AL.: 'Tunable multilayer-film distributed-Bragg-reflector filter' * page 1222, colonne de gauche, ligne 10 - ligne 13 * * page 1225, colonne de droite, ligne 10 - ligne 17; figure 1 * --- | 1 | |
| | -/-- | | |

Le présent rapport a été établi pour toutes les revendications

| Lieu de la recherche | Date d'achèvement de la recherche | Examinateur |
|---|---|---|
| LA HAYE | 07 FEVRIER 1992 | BATTIPEDE F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 91 40 2950
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 12, no. 309 (P-748)(3156) 23 Août 1988<br>& JP-A-63 080 225 ( KURARAY ) 11 Avril 1988<br>* abrégé *<br>--- | 1-3 | |
| A | IEEE PHOTONICS TECHNOLOGY LETTERS<br>vol. 1, no. 10, Octobre 1989, NEW YORK, US<br>pages 307 - 309;<br>F.C. JAIN ET AL.: 'Multiple quantum well optical modulator structures using surface acoustic wave induced Stark effect'<br>* abrégé; figure 1 *<br>--- | 1,11-12 | |
| P,X | EP-A-0 403 389 (ETAT FRANCAIS, REPRESENTE PAR LE MINISTRE DES POSTES, ...)<br>* colonne 5, ligne 10 - ligne 15 *<br>* colonne 7, ligne 12 - ligne 18 *<br>* colonne 9, ligne 46 - colonne 10, ligne 4 *<br>* colonne 12, ligne 17 - ligne 40; figures 8,10 *<br>----- | 1,5-6,9, 11-12 | DOMAINES TECHNIQUES RECHERCHES (Int. Cl.5 ) |

Le présent rapport a été établi pour toutes les revendications

| Lieu de la recherche | Date d'achèvement de la recherche | Examinateur |
|---|---|---|
| LA HAYE | 07 FEVRIER 1992 | BATTIPEDE F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)